# EUROPÄISCHE PATENTSCHRIFT

(11) **EP 3 369 471 B1**
(45) Veröffentlichungstag und Bekanntmachung des Hinweises auf die Patenterteilung: **01.06.2022**
(21) Anmeldenummer: 18163014.6
(22) Anmeldetag: 11.07.2012
(51) Int. Cl.: B01D 46/00, F04D 23/00

(54) **LANGGESTRECKTE UND GEKRÜMMTE FILTERPATRONE MIT ZWEI PLISSIERTEN FILTERKERZEN, ZUM EINSATZ IN EINEM LUFTFILTER**
ELONGATED AND CURVED FILTER CARTDRIDGE WITH TWO PLEATED FILTER CANDLES, FOR USE IN AN AIR FILTER
CARTOUCHE FILTRANTE ALLONGÉE ET COURBÉE AVEC DEUX BOUGIES FILTRANTES, DESTINÉE À L'UTILISATION DANS UN FILTRE À AIR

(30) Priorität: 03.08.2011 DE 102011052379; 15.02.2012 DE 102012101185
(43) Veröffentlichungstag der Anmeldung: 05.09.2018
(62) Teilanmeldung aus: 12733507.3
(73) Patentinhaber: Gebr. Becker GmbH, 42279 Wuppertal (DE)
(72) Erfinder: Bahnen, Rudolf, 52159 Roetgen (DE); Kriebel, Ulli, 42719 Solingen (DE); Buchholz, Lars, 58300 Wetter (DE); Waniek, Henryk, 42651 Solingen (DE); von Kathen, Achim, 42349 Wuppertal (DE)
(74) Vertreter: Müller, Enno

(56) Entgegenhaltungen:
- EP-A1- 1 473 522
- WO-A1-85/04115
- WO-A1-2011/023503
- JP-A- 2005 066 436
- US-A- 5 876 599
- US-A1- 2007 157 808
- US-A1- 2008 271 607

## Beschreibung

Die Erfindung betrifft zunächst ein Filterteil zum Einsatz in einem LuftfilterVorsatz, aufweisend ein Filterelement mit einer Filterwandung aus plissiertem Filtermaterial und einem inneren Freiraum, wobei weiter ein Grundriss des Filterteils langgestreckt kreisabschnittsförmig gekrümmt ist und in Erstreckungsrichtung mit gekrümmten Randkanten ausgebildet ist.

Weiter betrifft die Erfindung einen Luftfilter-Vorsatz für eine Strömungsmaschine mit einem derartigen Filterteil und einen Seitenkanalverdichter mit einem solchen Luftfilter-Vorsatz.

Aus der WO 2009/106593 A1 ist ein Filterteil zum Einsatz in einen Luftfilter bekannt, bei welchem der Grundriss im Wesentlichen lang gestreckt ovalförmig ist. Die Filterelemente werden in Richtung ihrer Längsachse durchströmt. Die Decke ist entsprechend offen.

Darüber hinaus ist auf Luftfilter-Vorsätze zu verweisen, wie sie etwa aus der EP 656 480 und der WO 2008/125630 A1 bekannt sind. Aus der EP 1473522 A1 ist ein Luftfilter-Vorsatz mit einem Filterteil bekannt, bei welchem das zu filternde Medium über den Einlass sogleich in den Innenraum des Filterelements und von dort nach außen durch die Filterwandung strömt. Das Bodenteil umfasst lediglich einen unteren Bereich der Filterelemente.

Aus der US 2007/0157808 A1 ist eine Filteranordnung bestehend aus mehreren keilförmig gefalteten Filterelementen bekannt. Aus der WO 85/04115 A1 ist ein Filterelement mit einer plissierten, im Grundriss kreisförmigen Filterwandung bekannt, bei welchem eine mit einer Öffnung versehene Filterdecke und ein

### Bodenteil vorgesehen sind

Die WO 2011/023503 A1 offenbart in den Abbildungen 22 und 23 ein Filterteil mit mehreren Filterelementen und mit einem langgestreckten, kreisabschnittsförmig gekrümmten Grundriss. Schließlich offenbart die US 5 876 599 A ein Filterteil mit einer Filterwandung aus plissiertem Material und mit einem Nierenförmigen Grundriss.

Ausgehend von dem genannten Stand der Technik beschäftigt sich die Erfindung mit der Aufgabenstellung, ein vorteilhaftes Filterteil zum Einsatz in einem Luftfilter anzugeben.

Diese Aufgabe ist beim Gegenstand des Anspruches 1 gelöst.

Das Filterteil ist im Gebrauchszustand im Grundriss langgestreckt und in Erstreckungsrichtung mit gekrümmten Randkanten ausgebildet. Das Filtermaterial des Filterteils ist insgesamt plissiert vorgesehen. Und zwar bevorzugt mit Plissierungsfalten, die sich senkrecht zu einer Durchströmungsrichtung erstrecken und/oder senkrecht zu einer Grundriss-Erstreckungsrichtung des Luftfilter-Vorsatzes. In Erstreckungsrichtung eines Luftfilter-Vorsatzes, in welchen das Filterelement bevorzugt einzusetzen ist, ist die Höhe des Filterelementes bevorzugt gleichbleibend gebildet.

Zumindest eine der Randkanten des Filterelementes kann konkav verlaufen. In den genannten Grundrissflächen ist bevorzugt bodenseitig jeweils ein Auslass vorgesehen, durch welchen das zu filternde Medium in Richtung auf dieselbe Auslassöffnung ausströmt. Die Auslassöffnung kann in dem Filterteil selbst bereits vorgesehen sein. Sie kann aber auch erst in dem Luftfilter-Vorsatz, in den das Filterteil einzusetzen ist, ausgebildet sein.

Das Filterteil kann in einem Aufnahmegehäuse, einem Luftfilter-Vorsatz, weiter bevorzugt in einer der Ausführungsformen wie sie hier beschrieben sind, schraubbestigt vorgesehen sein. Hierzu sind an der Filterdecke geeignete ohrenartige Ausformungen vorgesehen. Diese können bspw. in Form von über einen Grundriss der Filterdecke an mehreren Stellen, bspw. an drei oder vier Stellen, vorstehende Ösen gebildet sein, durch welche hindurch Schrauben gesteckt oder geschraubt werden können. Das Gegengewinde kann auch in dem Aufnahmegehäuse, also etwa in dem Luftfilter-Vorsatz, vorgesehen sein.

Die Filterdecke und das Bodenteil weisen wie das Filterteil als solches einen langgestreckten Grundriss auf. Dies folgend einem inneren Öffnungsquerschnitt des Gehäuses, also insbesondere des Luftfilter-Vorsatzes, in welchen das Filterteil aufzunehmen ist.

Die Filterdecke und das Bodenteil weisen übereinstimmende Grundrisse auf. Bei einem Luftfilter-Vorsatz für eine Strömungsmaschine, insbesondere einen Seitenkanalverdichter, mit einem Gehäuse und einem in einem Gehäu-**(weiter auf Seite 4, oben der ursprünglich eingereichten Unterlagen)** se-Innenraum angeordnet sind, beispielsweise aus einem Vlieswerkstoff bestehenden Filtermedium, mit im Gehäuse ausgebildeten, einen freien Öffnungsquerschnitt aufweisenden Einlass und Auslass für die durchgesaugte Luft, kann das Filterteil angeordnet sein.

Das Gehäuse kann in einer Draufsicht zumindest teilweise innerhalb einer Außenkontur des Seitenkanalverdichters, bezogen auf eine Projektion der Verdichter-Außenkontur (Gebläse-Außenkontur) zu in Richtung einer Drehachse der Verdichter-Gebläses angeordnet sein und eine nicht kreisförmige Gestalt aufweisen.

Dadurch, dass der Luftfilter-Vorsatz, zumindest bezogen auf eine das Filterteil unmittelbar umfassende Wandung, eine nicht kreisförmige Grundriss-Gestalt aufweist, kann er sich in Umfangsrichtung der Verdichter-Außenkontur erstreckend angeordnet sein. Er ist damit bevorzugt auch langgestreckt ausgebildet. Trotz einer erheblichen Größe, insbesondere in seiner Erstreckungsrichtung, kann er zumindest teilweise innerhalb der Außenkontur des Verdichters angeordnet sein. Dies bevorzugt mit einer Einströmrichtung, die gleichgerichtet zu einer Richtung der Drehachse des Verdichter-Gebläses gegeben ist.

Der Gehäuse-Innenraum bezüglich des Luftfilter-Vorsatzes, der Filtermaterial aufweist, kann sich seitlich zu einem Öffnungsquerschnitt des Einlasses oder des Auslasses ungleichförmig und jedenfalls in einer Richtung um ein Vergrößerungsmaß erstrecken, dass dem dem 11/2 -fachen oder mehr der Abmessung von einer Mittelachse des jeweiligen Öffnungsquerschnitts bis zu einer Grenze des Öffnungsquerschnitts in dieser Richtung entspricht. Die Erfindung schlägt insoweit einen Luftfilter vor, mit einer bezogen auf einen Strömungsweg, der bezogen auf eine senkrechte Projektion jedenfalls des Einlasses eine von dieser Projektion abweichende Luftdurchströmung erfordert oder zumindest ermöglicht. Die jedenfalls in einer Richtung gegebene Vergrößerung kann zunächst eine Anordnung auch von Filtermaterial in einem Bereich bedeuten, der nicht in dem von der durchgesaugten Luft genommenen (zunächst) druckgünstigsten Weg zwischen dem Einlass und Auslass liegt. Jedoch ist erkannt worden, dass auch dieses Filtermaterial zur Wirkung kommt, nämlich dann, wenn das Filtermaterial auf dem direkten Weg zwischen Einlass und Auslass sich zunehmend zusetzt und die Luft entsprechend einem längeren, aber mit (dann) geringerem Druckverlust verbundenen Weg sucht.

Hierzu ist auch förderlich, wenn, zumindest gesehen vom Einlass aus, bis zu dem Beginn des Filtermaterials in Strömungsrichtung ein gewisser Freiraum, der sich möglichst auch über die gesamte, insbesondere in Richtung des Vergrößerungsmaßes sich erstreckende Filterfläche erstreckt, gegeben ist. Über diesen Freiraum kann dann zunehmend die Ablenkung der Durchströmung frei erfolgen.

Die angegebene Gestaltung ermöglicht die Ausbildung von Luftfiltern in Kombination mit einer Strömungsmaschine wie insbesondere einem Seitenkanalverdichter, dessen Gehäuse abweichend von der üblichen zylindrischen Form gebildet ist und sich entsprechend an den gegebenen Raumverhältnissen anpassen kann.

Insbesondere kann ein solches Gehäuse, in Projektion einer Drehachse des Gebläses eines bspw. Seitenkanalverdichters gesehen, einen kreisbahnabschnittsförmigen, nierenförmigen oder ovalen Grundriss aufweisen. Hierbei können Ein- und Auslass den Enden des Kreisbahn-Abschnittes, den Enden der Nierenform oder eben den Enden des Ovals zugeordnet sein.

Insbesondere ist bevorzugt, dass die freien Öffnungsquerschnitte des Einlasses und des Auslasses in senkrechter Projektion zusammenfallen oder sich jedenfalls überlappen und zusammengefasst einen, ggf. gedachten, Gesamtquerschnitt ergeben, wobei weiter der das Filtermaterial aufweisende Gehäuseinnenraum sich seitlich zu dem Gesamtquerschnitt jedenfalls in einer Richtung um das genannte Vergrößerungsmaß erstreckt, das von einer Mittelachse eines der Öffnungsquerschnitte, ggf. des insofern einen Teil des den Gesamtquerschnitt erzeugenden Öffnungsquerschnitts, bis zu der Grenze des Gesamtquerschnitts in dieser Richtung entspricht. Es ergibt sich auch insofern bei einem solchen Luftfilter bezogen auf einen direkten Strömungsweg zwischen Einlass und Auslass eine unsymmetrische Gehäuseausbildung oder jedenfalls eine gegenüber dem genannten Gesamtquerschnitt stark vergrößerte Gehäuseausbildung. Dies führt auch insofern zunächst dazu, dass Filtermaterial, das außerhalb dieses Gesamtquerschnittes liegt, nicht oder viel weniger von der durchströmenden Luft durchströmt wird. Auch hierbei kann dieser Umstand hingenommen werden, da im Zuge eines Zusetzens des Filtermaterials sich, auch aufgrund eines damit sich verschiebenden Druckabfalls über den Querschnitt, gleichsam natürlicherweise auch eine Durchströmung des Querschnitts des Filtermaterials ergibt, der zunächst weniger durchströmt wurde.

Im Weiteren ergibt sich im Hinblick auf die angesprochenen Gestaltungen des Luftfilters die konstruktive Möglichkeit, neben dem Einlass und in Nebeneinanderanordnung hierzu noch ein weiteres Konstruktionselement in dem Luftfilter, wie dies weiter unten noch näher beschrieben ist, vorzusehen. Darüber hinaus, auch unabhängig von der genannten Möglichkeit, eröffnet sich durch eine solche Gestaltung eines Luftfilter-Vorsatzes auch die Möglichkeit, bei gleichem Filtervolumen, also gleicher Menge an durchströmbarem Filtermaterial, einen jedenfalls in einer Dimension kleiner bauenden Luftfilter zu erreichen, der zudem noch von seinen Außenabmessungen her günstig in eine Gesamtgestaltung der Strömungsmaschine eingepasst sein kann.

Bezüglich einer Strömungsmaschine, insbesondere einem Seitenkanalverdichter mit daran angeordnetem Luftfilter kann der Luftfilter-Vorsatz innerhalb der Außenkontur, insbesondere der Außenkontur des Gehäuses des Verdichterrades angeordnet sein, gesehen in eine Richtung der Drehachse des Verdichterrades. Er kann aber auch nur teilweise innerhalb dieser Außenkontur angeordnet sein. Weiter kann auch vorgesehen sein, dass der Luftfilter-Vorsatz hinsichtlich eines Endes eines Endbereiches vollständig innerhalb der Außenkontur angeordnet ist, in Umfangsrichtung dann aber über die Außenkontur hinauswächst.

Es ist bevorzugt, dass das eingangs genannte Vergrößerungsmaß, insbesondere ausgehend von dem Einlass, nur zu einer Seite hin gegeben ist. Insbesondere kann auch eine Querschnittsfläche des Gehäuseinnenraumes und/oder des Gehäuseaußenraumes eine ovale oder kreisringförmige Gestaltung aufweisen. Darüber hinaus ist bevorzugt auch eine hinsichtlich einer geometrischen Mittelachse des Querschnitts gekrümmt verlaufende Gestaltung der Querschnittsfläche oder auch des Gehäuses insgesamt, bezogen auf eine Draufsicht, realisiert.

Ein weiteres Merkmal bezieht sich darauf, dass in Draufsicht auf den Luftfilter-Vorsatz neben dem Lufteinlass noch eine Öffnung oder ein Stutzen vorgesehen ist, die bzw. der bspw. zur Halterung oder Ausbildung eines Sicherheitsventils dient. Dieser Stutzen ist entsprechend in Überdeckung oder seitlich versetzt zu dem zunächst nicht oder sehr viel weniger durchströmten Filtermaterial. Sollte betrieblich sich der Luftfilter-Einlass einmal zusetzen, öffnet auf entsprechenden Unterdruck hin das Sicherheitsventil und kann auch so sogleich den Filter in einem Bereich durchströmen, der in der Regel zuvor noch nicht wesentlich durchströmt und damit noch nicht wesentlich zugesetzt ist.

Der Einlassquerschnitt des Einlasses für durchgesaugte Luft entspricht bevorzugt einem üblichen Standardquerschnitt für einen Luftfilter-Vorsatz einer Strömungsmaschine, für welche der Luftfilter-Vorsatz vorgesehen ist, also insbesondere einen Seitenkanalverdichter. Er ist entsprechend mit der Verdichterleistung der Strömungsmaschine ggf. unterschiedlich.

Hinsichtlich des Filterteils ist bevorzugt, dass die langgestreckte Ausbildung des Grundrisses ein größtes Erstreckungsmaß aufweist, das größer ist als die Höhe des Filterteils. Insbesondere bei sogenannten Kerzenfiltern ist es nur bekannt, relativ hohe Filterteile zu bilden, bei denen das Maß der Höhe, um welches sich ausgehend von einem Bodenteil bei einer solchen Filterkerze der innere Hohlraum erstreckt, größer ist als die größte Erstreckung des Grundrisses (in einer Ebene oder projiziert auf eine Ebene).

Auch ist bevorzugt, dass die Filterhöhe in Erstreckungsrichtung der Grundfläche, die auch bevorzugt ebenflächig ist, im Wesentlichen gleichbleibend ist. Eine weitere bevorzugte Ausführungsform betrifft die Maßnahme, dass zumindest eine Randkante des Grundrisses konkav verläuft. Weiter bevorzugt ist die weitere Randkante mit gleicher Krümmung konvex gebildet.

Nachstehend ist die Erfindung des Weiteren anhand der beigefügten Zeichnung erläutert, die aber lediglich Ausführungsbeispiele darstellt.

Auf der Zeichnung zeigt:
- Fig. 1: eine perspektivische Darstellung eines Seitenkanalverdichters mit einem Luftfilter-Vorsatz;
- Fig. 2: eine Darstellung gemäß Fig. 1, jedoch mit einem zusätzlich aufgesetztem Sicherheitsventil;
- Fig. 3: einen Querschnitt durch den Gegenstand gem. Fig. 2, geschnitten entlang der Ebene III-III in Fig. 2;
- Fig. 4: eine Draufsicht auf das Filtergehäuse gemäß Fig. 2 in Alleinstellung;
- Fig. 5: eine schematische Darstellung eines Seitenkanalverdichters, gesehen in Richtung der Drehachse des Gebläses und gesehen auf die Rückseite, mit in der Außenkontur des Gebläses angeordnetem kreisringabschnittsförmigen Filter;
- Fig. 6: eine perspektivische Ansicht eines nicht erfindungsgemäßen, plissierten Filterteils mit unrundem Grundriss;
- Fig. 7: eine Draufsicht auf einen Zuschnitt von Filtermaterial, wie er zur Herstellung des Gegenstandes gemäß Fig. 6 genutzt sein kann, bereits teilweise plissiert;
- Fig. 8: eine Draufsicht auf den Gegenstand gemäß Fig. 6;
- Fig. 9: eine Darstellung gemäß Fig. 6 eines nicht erfindungsgemäßen Filterteils ausgebildet nach Art einer Filterkerze;
- Fig. 10: eine Darstellung des Filterteils gem. Fig. 9 im Einbauzustand, schematisch;
- Fig. 11: eine Explosionsdarstellung eines weiteren Filterteils mit einem weiteren Luftfilter-Vorsatz; Dieses Filterteil entspricht dem Anspruch
- Fig. 12: der Luftfilter-Vorsatz gem. Fig. 11 in einer Draufsicht;
- Fig. 13: einen Querschnitt durch den Gegenstand gem. Fig. 12, geschnitten entlang der Linie XIII-XIII in Fig. 12;
- Fig. 14: eine Unteransicht des Gegenstands gem. Fig. 12;
- Fig. 15: eine weitere, nicht erfindungsgemäße Ausführungsform in einer Ansicht gem. Fig. 12;
- Fig. 16: einen Querschnitt durch den Gegenstand gem. Fig. 15, geschnitten entlang der Linie XVI-XVI in Fig. 15; und
- Fig. 17: eine Draufsicht auf eine weitere, nicht erfindungsgemäße Ausführungsform in einer Ansicht gem. Fig. 12.

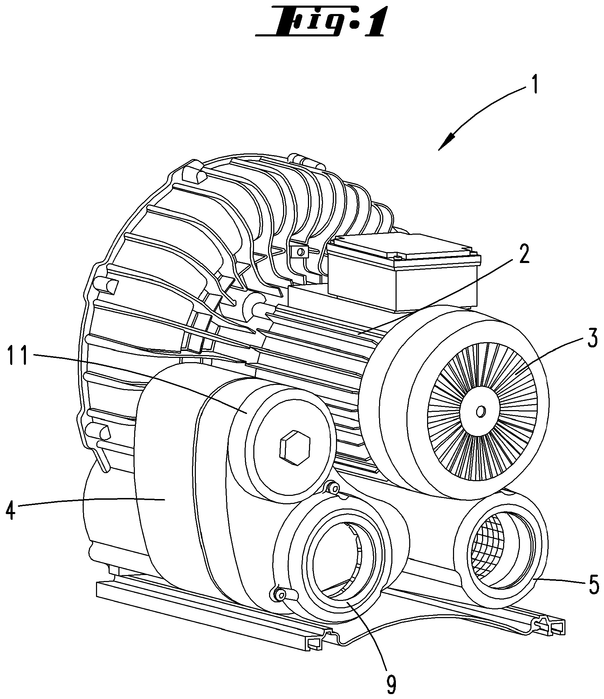

Dargestellt und beschrieben ist, zunächst mit Bezug zu Fig. 1, ein Seitenkanalverdichter 1 mit einem angeflanschten Elektromotor 2, der ein Gebläse 3 aufweist. Weiter ist an dem Seitenkanalverdichter ein Luftfilter-Vorsatz 4 angebracht und ein mit einer Schallschutzeinrichtung ausgebildeter Luftauslass-Vorsatz 5.

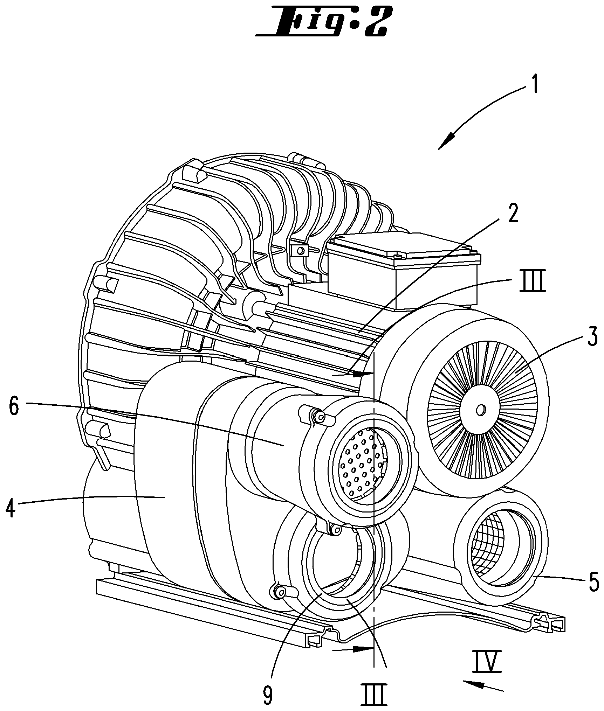

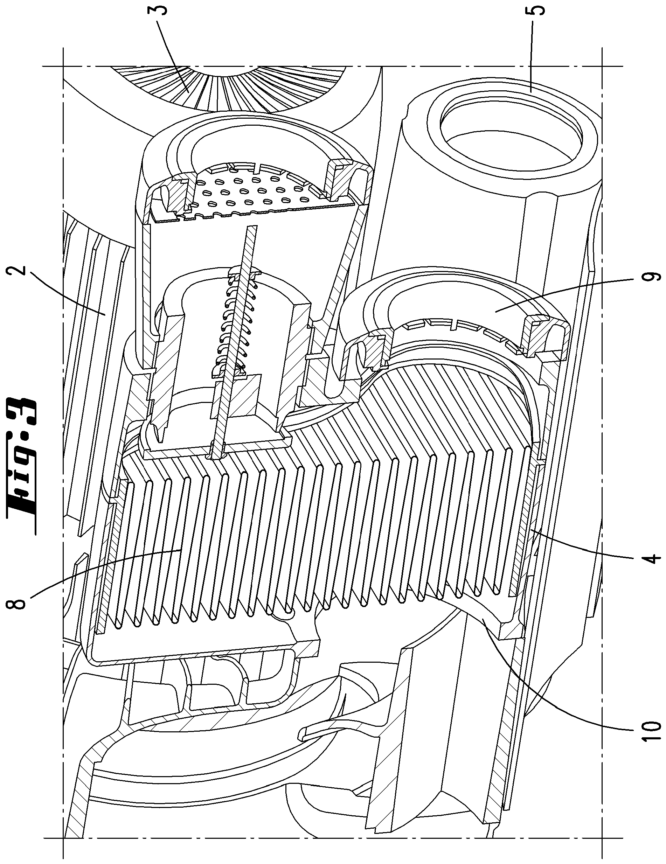

Fig. 2 zeigt einen vergleichbaren Seitenkanalverdichter, wobei jedoch an dem Luftfilter-Vorsatz 4 zusätzlich ein Sicherheitsventil 6 angeflanscht ist. Es handelt sich um ein Notventil, das selbsttätig öffnet, sollte der Lufteinlass einmal zugesetzt sein. Die Einzelheiten sind aus Fig. 3 ersichtlich. Der Luftfilter-Vorsatz 4 weist für den möglichen Anbau des Sicherheitsventils 6, siehe Fig. 1, bevorzugt einen Anschlussflansch 11 auf.

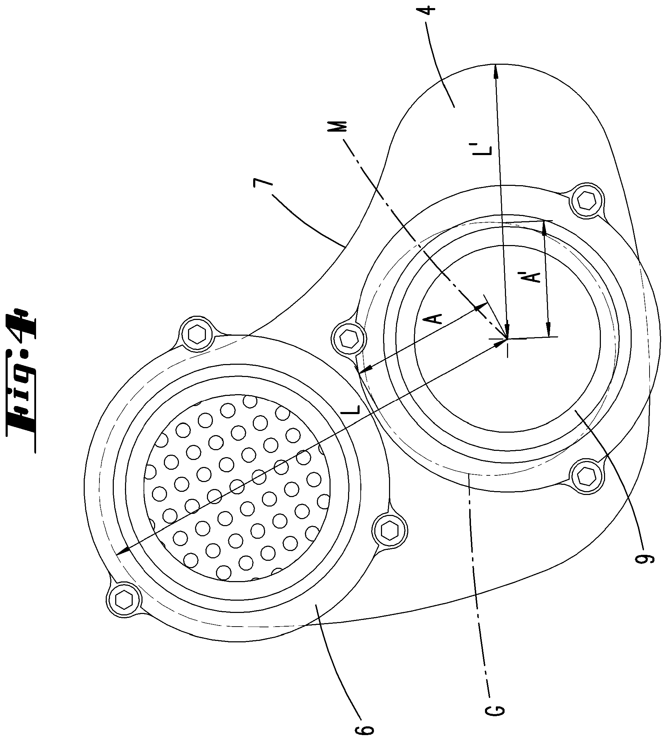

Der Luftfilter-Vorsatz 4 ist in Draufsicht in Fig. 4 dargestellt. Es ist zu erkennen, dass er, bezogen auf die dort ersichtliche Außenansicht, einen unrunden Grundriss 7 aufweist. Insgesamt ist die Gestaltung in dieser Ansicht nierenförmig.

Der Gehäuseinnenraum ist, vermindert um die jeweilige Wandstärke, bevorzugt gleich der Außenkontur gestaltet.

In dem Gehäuseinnenraum, vgl. Fig. 3, sitzt ein Filtermaterial 8. Es handelt sich ersichtlich um in üblicher Weise plissiertes Filtermaterial 8.

An dem Luftfilter-Vorsatz 4 ist gegenüberliegend zu einem Einlass 9 ein Auslass 10 ausgebildet. Die freien Querschnitte des Einlasses 9 und Auslasses 10 sind in senkrechter Projektion leicht versetzt zueinander angeordnet. Sie bilden zusammengefasst den Gesamtquerschnitt G.

Oberhalb des Filtermaterials 8 ist zugeordnet dem Einlass ein Freiraum ausgebildet, hier konkret oberhalb der durch die Plissierkanten des Filtermaterials 8 gebildeten Ebene und begrenzt durch die zugeordnete Innenfläche des Gehäuses, in welchem die Luft zunächst frei ausweichen kann, wenn aufgrund einer gewissen Zusetzung des Filtermaterials in dem zunächst gewählten Luftweg die durchströmende Luft einen anderen Weg sucht. Bevorzugt erstreckt sich dieser Freiraum oberhalb einer Projektionsfläche des gesamten Filtermaterials (Projektion in Einlassrichtung der Luft bzw. entsprechend einer zentralen Drehachse des Gebläses).

Mit Bezug zu Fig. 4 und den dort ersichtlichen Einlass-Öffnungsquerschnitt kann eine Mittelachse M bezüglich des dort ersichtlichen Öffnungsquerschnittes angegeben werden. Von hier aus ausgehend kann hinsichtlich des strichpunktiert in Fig. 4 eingezeichneten Gesamtquerschnittes G eine Abmessung A in der hier gegebenen ersten Vergrößerungsrichtung des Gehäuses von der Mittelachse M bis zu dem Rand des Gesamtquerschnittes G abgetragen werden. Ein in dieser Vergrößerungsrichtung gegebenes Gesamtmaß L des Gehäuseinnenraumes entspricht beim Ausführungsbeispiel dem 2 bis 3-fachen der Abmessung A, konkret etwa dem 2,5-fachen. Bevorzugt ist ein Verhältnis von 1,5 : 5.

In der hier gegebenen zweiten Vergrößerungsrichtung ergeben sich entsprechende Verhältnisse A' zu L'.

Die Vergrößerung kann auch nur einseitig gegeben sein.

Die vor- und nachstehend angegebenen Bereiche schließen hinsichtlich der Offenbarung auch sämtliche Zwischenwerte ein, insbesondere in ¹/₁₀-Schritten, also bspw. ein Verhältnis von 1,6 : 5 oder 1,5 : 4,9 etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

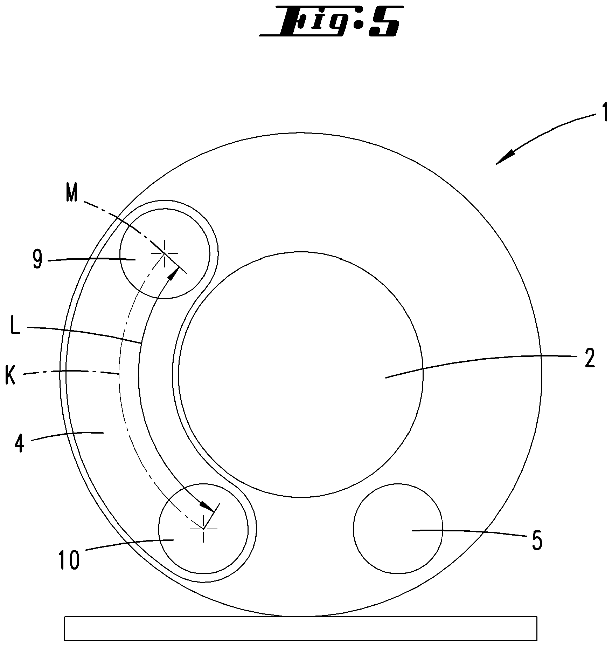

Bei der Ausführungsform der Figur 5 ist ein insgesamt kreisringabschnittsförmig gebildeter Luftfiltervorsatz 4 vorgesehen. Es handelt sich um eine schematische Darstellung. Es ist der Einlass 9 und der (gegenüberliegende) Auslass 10 bzw. Einlass in das Gebläse zu erkennen.

Ausgehend von der Mittelachse M des dort ersichtlichen Öffnungsquerschnittes kann eine Abmessung A von der Mittelachse M bis zu dem Rand dieses Öffnungsquerschnittes abgetragen werden. Angesichts der geometrischen Grundrissgestaltung in Form eines Kreisringabschnittes ist hierbei die Abmessung A auf einer Mittelkreislinie K abgetragen. In Richtung auf den Auslass 10 ist die Vergrößerungsrichtung des Gehäuses gegeben. Ein in dieser Vergrößerungsrichtung gegebenes Gesamtmaß L, auch insofern abgetragen auf der Kreisbogenlinie K, entspricht beim Ausführungsbeispiel dem 5- bis 10-fachen, konkret etwa dem 7-fachen der Abmessung A. Dieser Bereich hat auch für das zunächst beschriebene Ausführungsbeispiel Bedeutung.

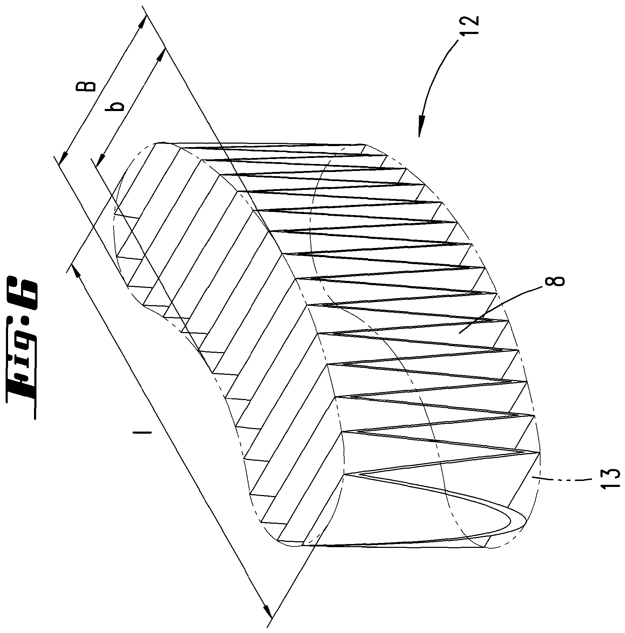

Dir Figuren 6 bis 10 betreffen Filterteile, wie sie insbesondere in einem Filtervorsatz gemäß vorstehender Beschreibung Anwendung finden können.

Mit Bezug zu Fig. 6 ist ein Filterteil 12 dargestellt, das aus einem plissierten Filtermaterial 8 besteht und eine Grundrissfläche 13 aufweist, die langgestreckt ist, nämlich eine größere Länge 1 als Breite b aufweist. Hierbei ist die Breite b auf die Breite des Filterteils in einem Bereich über die Längserstreckung angesprochen, nicht eine möglicherweise größte Breite B, die ohne Berücksichtigung der Krümmung gegeben ist.

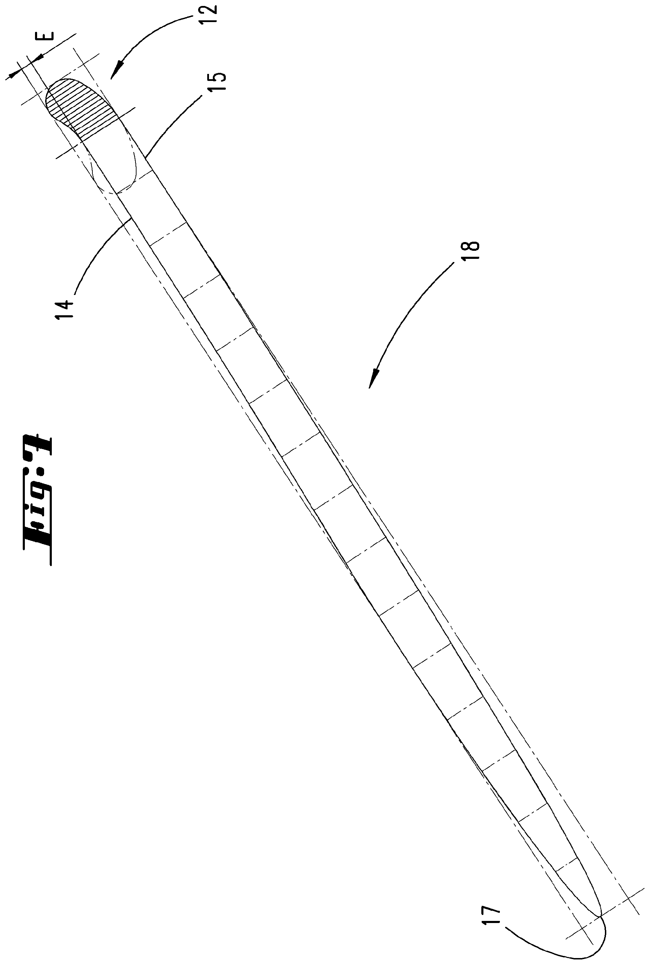

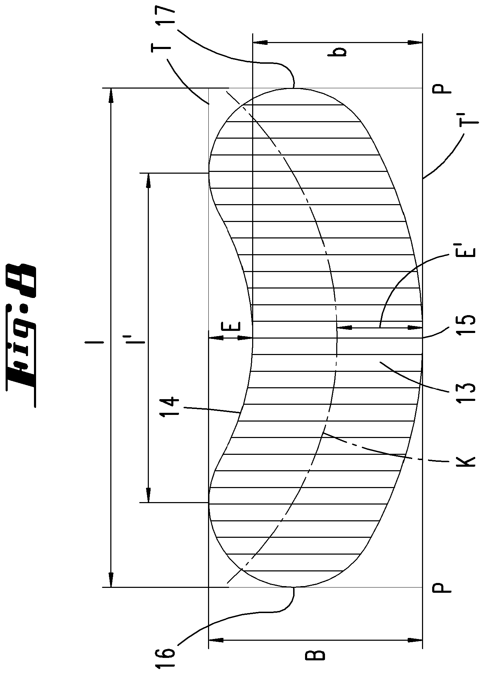

In der Erstreckungsrichtung, wie sie beim Ausführungsbeispiel in Richtung des Längenmaßes 1 gegeben ist, verläuft das Filterteil ersichtlich mit gekrümmten Randkanten 14, 15, die beim Ausführungsbeispiel über stärker gekrümmte stirnseitige Randkanten 16, 17 ineinander übergehen (vgl. auch Fig. 8). Die Randkanten bezüglich der Ausführungsform der Figuren 6 und 7, also des durchgehend aus plissiertem Filtermaterial gebildeten Filterteils 12, sind hierbei die Randkanten, die sich aus der jeweiligen Breitenerstreckung des Filtermaterials 8 zusammengesetzt ergeben. Sie sind teilweise entsprechend über ihre Länge nicht mit einer tatsächlichen realen Kante zusammenfallend.

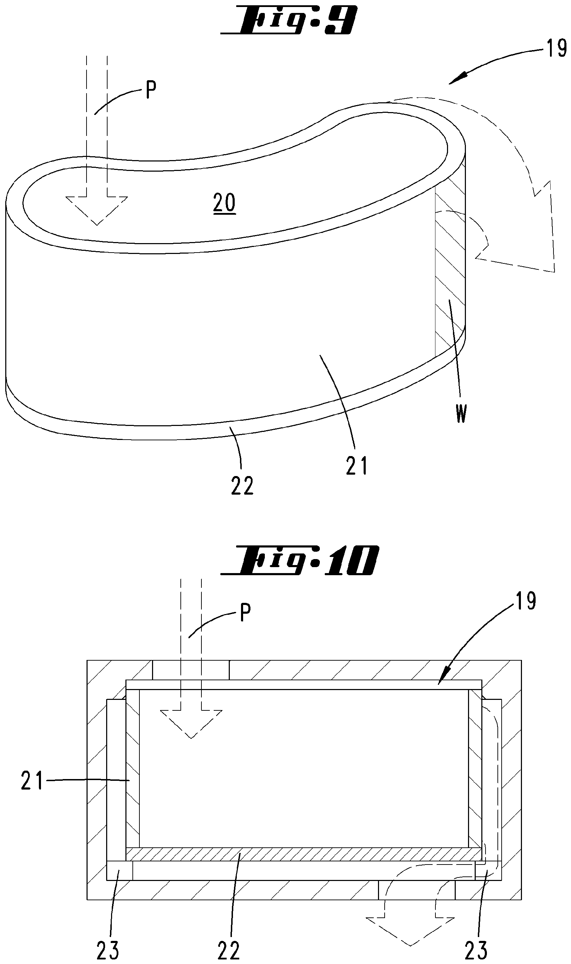

Das Filtermaterial 8 gemäß Fig. 7 ist beispielsweise ein Vliesmaterial, das in diesem Zuschnitt (linker Bereich der Darstellung) den Ausgangszustand darstellt bzw. bereits plissiert ist (rechter Bereich der Darstellung). Es wird entsprechend der Darstellung in Fig. 6 insgesamt gefaltet, so dass sich dann die Endform des Filterteils gemäß Fig. 6 ergibt. Fig. 8 zeigt den Grundriss des Filterteils gemäß Fig. 6, es kann sich aber auch um den Grundriss des Filterteils gemäß den Figuren 9 und 10 handeln.

Bei der Darstellung gem. Fig. 8 handelt es sich um einen Kreisringabschnitt, mit den genannten gerundeten Stirnseiten. Hier ist ein bevorzugt geometrisch gleichförmiges Teil dargestellt, das entsprechend auch eine, wie zu Fig. 5 schon erläutert, Mittelkreislinie K aufweist.

Bevorzugt ist ein Krümmungsmaß E einer konkaven Randkante 14 gegenüber einer als Tangente T an die diesbezüglich am Weitesten nach innen vorragenden Bereiche dieser Randkante 14 gegebenen und entspricht einem Zwanzigstel oder mehr einer Länge l' zwischen den Berührungspunkten der Tangente T an die Randkante 14. Im Falle einer konvexen Randkante, wie hier bezüglich der Randkante 15 gegeben, ist von einer Tangente T' an die Randkante 15 auszugehen, parallel zu der Tangente T. Im Berührungspunkt der Tangente T' mit der Randkante 15 kann bis zu der Mittelkreislinie K das Maß E' abgenommen werden, das in gleicher Weise bevorzugt einem Zwanzigstel oder mehr der Länge l' entspricht. In beiden Fällen bis hin zu etwa der Hälfte der Länge l'.

Bezüglich des Filterteils 19 gemäß den Figuren 9 und 10 ist von Bedeutung, dass es über die genannte langgestreckte Gestaltung mit gekrümmten Randkanten hinaus eine einen inneren Freiraum 20 begrenzende umlaufende Filterwandung 21 aufweist und ein durchgehendes Bodenteil 22. Versetzt zu einem (Flächen-) Mittelpunkt des Grundrisses dieses Filterteils 21 einströmen Luft, entsprechend etwa dem Pfeil P in Fig. 9, wobei hier auch auf die realen Verhältnisse wie bei einem Filtervorsatz vorstehender Beschreibung beschrieben für den Lufteinlass Bezug genommen werden kann, ergibt sich, dass dieser durch die Wandung 21 austreten muss, um unter Umströmung des Bodenteils 22 in den Luftauslass zu gelangen. Hierzu kann das Bodenteil 21 auf bspw. Stufenabschnitten 23 im Einbauzustand aufsitzen, die ein entsprechendes Umströmen ermöglichen. Auch bei einem Filterteil 19 ergibt sich damit ersichtlich, wenn der zunächst kürzeste Bereich der für die Luftströmung hinsichtlich bspw. des in Fig. 9 schraffiert dargestellten Wandungsbereiche W zugesetzt ist, sich daran anschließende Wandungsbereiche zum Durchsetzen von der Luftströmung gesucht werden. Auch so kann nachfolgend bei entsprechend versetzter Ein- und Auslassströmung ein kontinuierliches Zusetzen der Wandung erreicht werden.

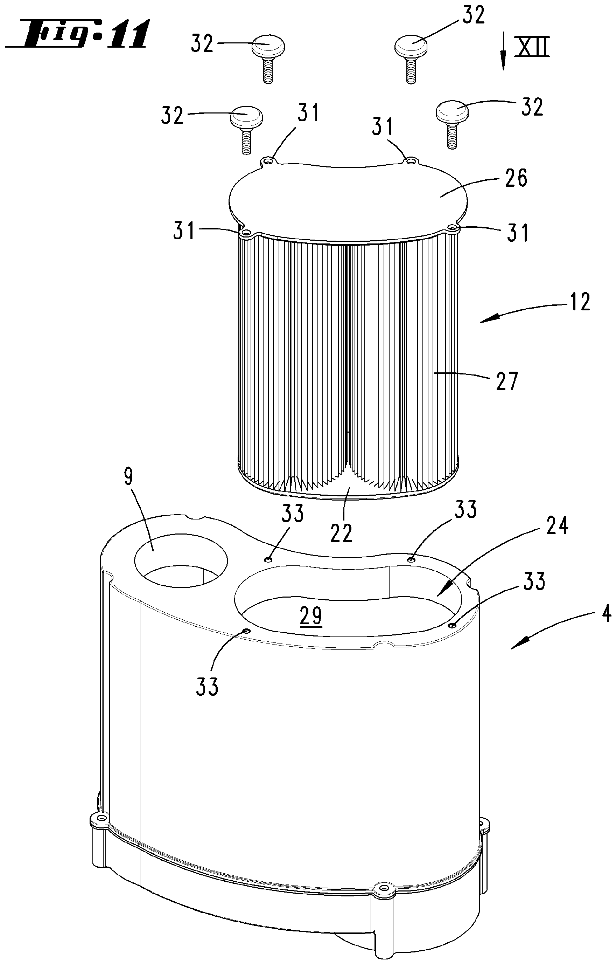

In Fig. 11 ist als Ausführungsbeispiel der Erfindung ein weiterer Luftfilter-Vorsatz 4 dargestellt, der ersichtlich eine kreisbogenabschnittsförmige Grundrissgestalt aufweist, mit abgerundeten Schmalseiten. Die Grundrissgestalt bezieht sich auf eine Erstreckung des Luftfilter-Vorsatzes im montierten Zustand in Umfangsrichtung eines Laufrades des Verdichters.

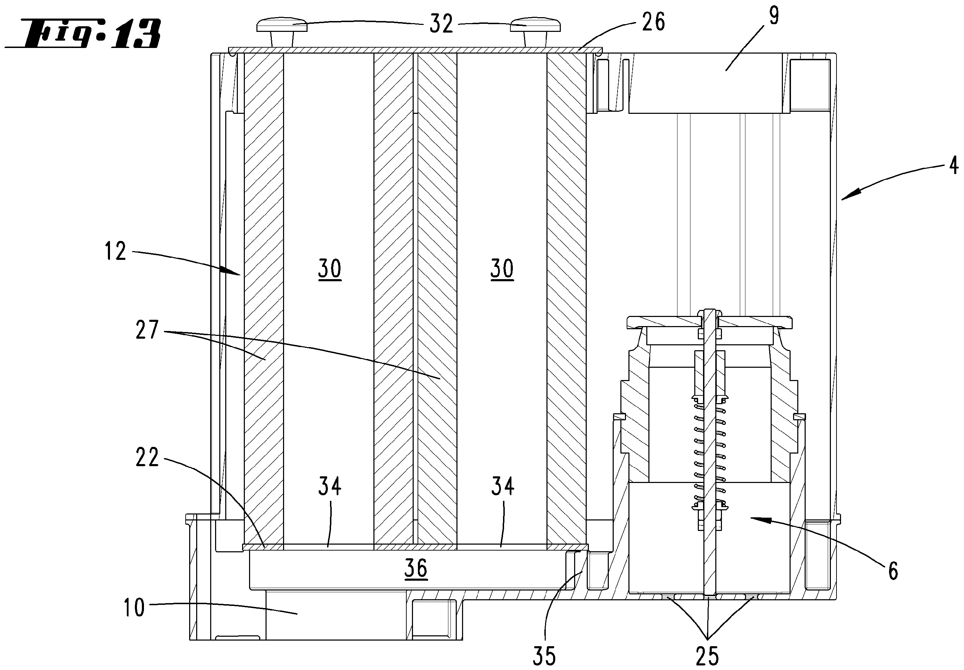

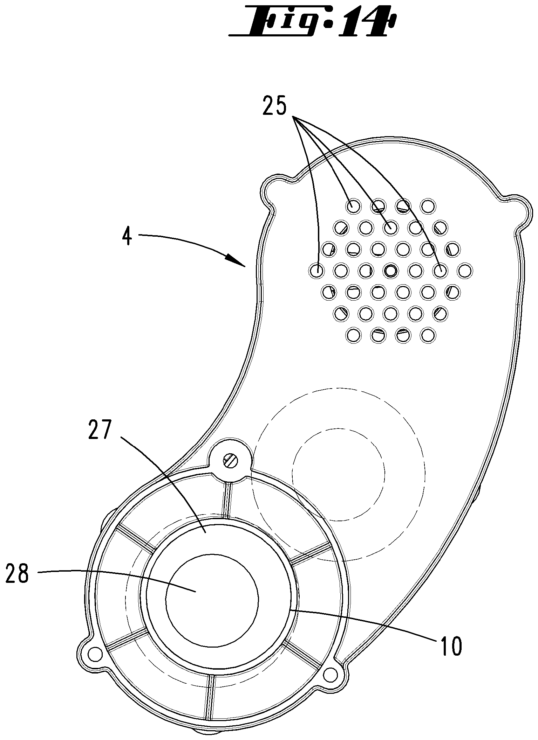

Dieser Luftfilter-Vorsatz 4 weist oberseitig einerseits einen Einlass 9 auf und andererseits eine Einsetzöffnung 24 auf. Die Einsetzöffnung 24 dient zum Einsetzen des Filterteils 12. Ersichtlich ist das Filterteil 12 in seinem Gesamt-Grundriss an die Öffnungsfläche der Einsetzöffnungen 24 angepasst. Unterseitig, vgl. auch Figuren 13 und 14, weist der Luftfilter-Vorsatz 4 einen Auslass 10 auf, sowie bevorzugt Einlassöffnungen 25 betreffend ein Sicherheitsventil 6. Das Sicherheitsventil 6 ist also bevorzugt gleichsam entgegengerichtet zu dem Einlass 9, bezogen auf eine Einströmrichtung am Einlass 9, angeordnet. Das Sicherheitsventil 6 ist insgesamt in den Luftfilter-Vorsatz integriert. Es ragt in das Innere des Luftfilter-Vorsatzes 4.

Das Filterteil 12 dieser Ausführungsform weist eine Filterdecke 26 auf und ein Bodenteil 22. Zwischen dem Bodenteil 22 und der Filterdecke 26 erstrecken sich zwei gesonderte Filterwandungen 27, die beim Ausführungsbeispiel ersichtlich aus plissiertem Material gebildet sind. Die Plissierungskanten verlaufen hierbei weiter ersichtlich bevorzugt in der Senkrechten, also senkrecht sich erstreckend zu der Filterdecke 26 bzw. dem Bodenteil 22. Sie erstrecken sich damit auch senkrecht zu einer Grundrissfläche des Filterteils bzw. des Luftfilter-Vorsatzes 4.

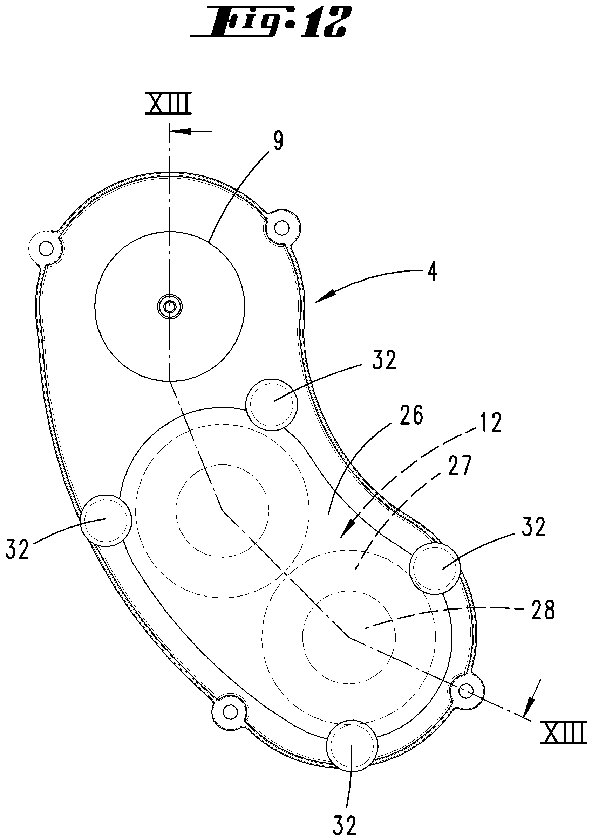

Die Filterwandungen 27, wie dies weiter aus Fig. 12 bspw. ersichtlich ist, begrenzen jeweils eine eigene, gesonderte Grundrissfläche 28. Beim Ausführungsbeispiel der Fig. 12 sind zwei Grundrissflächen 28 in Nebeneinanderanordnung vorgesehen. Diese sind jeweils voll umfänglich durch Filtermaterial 27 umgeben. Eine solche gesonderte Grundrissfläche 28 ist bevorzugt ersichtlich kreisförmig bzw. im Wesentlichen kreisförmig (bezogen auf den plissierten Verlauf des Filtermaterials beim Ausführungsbeispiel).

Das Filterteil 12 insgesamt weist jedoch einen wie schon angesprochen langgestreckten kreisabschnittsförmig gekrümmten Grundriss auf, angepasst an eine Querschnittskontur des Innenraumes 29 des Luftfilter-Vorsatzes 4.

Zu filterndes Medium, also insbesondere Luft, strömt durch den Einlass 9 in den Luftfilter-Vorsatz 4 ein und durch den Auslass 10 dann in die Strömungsmaschine. Nach dem Einlass 9 strömt das zu filternde Medium durch eine oder beide der Filterwandungen 27 in den inneren Freiraum 30, vgl. auch Fig. 13, der von einer solchen Wandung umschlossen ist. Wie sich dann auch insbesondere weiter aus Fig. 30 ergibt, strömt das zu filternde Medium aus einem oder beiden Freiräumen 30 dann jeweils durch denselben Auslass 10, also ggf. in die angeschlossene Strömungsmaschine.

Sollte sich eine der Filterwandungen 27 übermäßig zusetzen, kann entsprechend mehr zu filtrierendes Medium durch die andere Filterwandung 27 strömen. Es ist eine vorteilhafte Ausgleichsmöglichkeit geschaffen.

Die Filterdecke 26 weist weiter ersichtlich ohrenartige Ausformungen 31 auf, durch welche Befestigungsschrauben 32 in Gewindeöffnungen 33 des Luftfilter-Vorsatzgehäuses ragen können, zur Befestigung des Filterteils 12 in dem Luftfilter-Vorsatz 4.

In weiterer Einzelheit weist das Bodenteil 22 des Filterteils 12 jedem Freiraum 30 eine zugeordnete Bodenöffnung 34 auf, während in dem Luftfilter-Vorsatz, auch bodenseitig, eine Aufnahmeausformung 35 ausgebildet ist, auf welcher das Bodenteil 22 randseitig im Einbauszustand aufsitzt. Es ist dort abgedichtet. Zugleich ist ein Strömungskanal 36 hierdurch in dem Luftfilter-Vorsatz unterhalb des Bodenteils 22 und in Zusammenwirkung mit diesem gebildet, der die durchströmende Luft insgesamt zu dem Auslass 10, der diesbezüglich einseitig bevorzugt angeordnet ist, leitet.

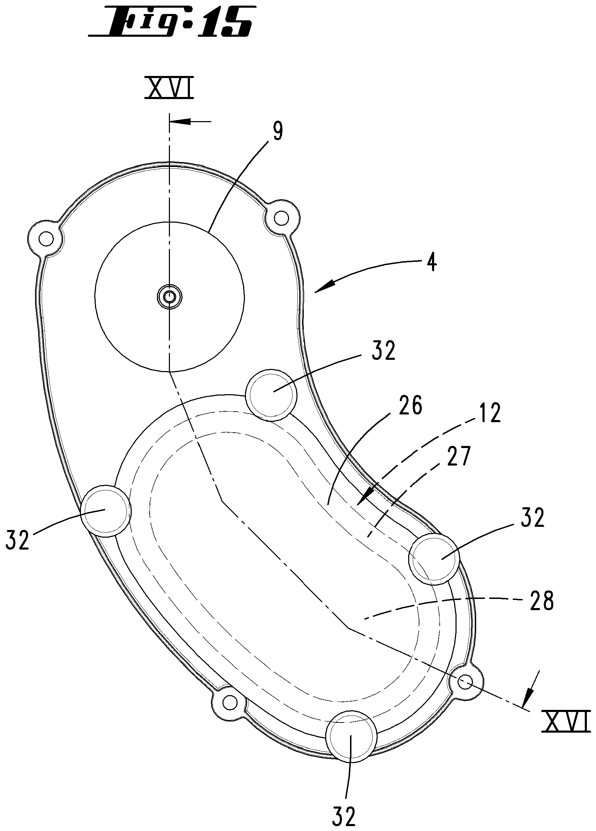

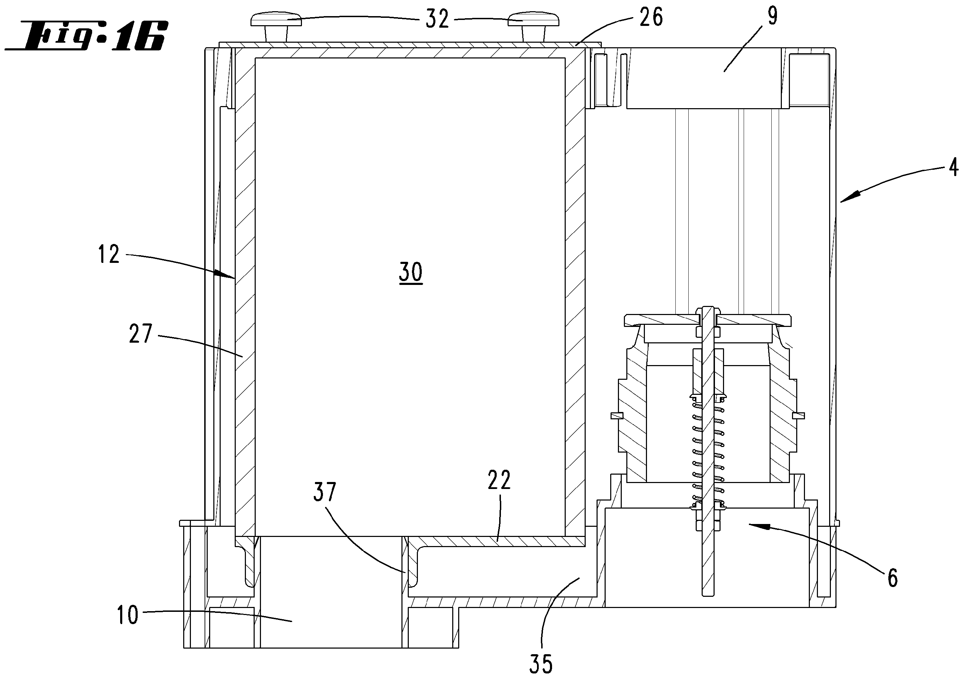

Bei der Ausführungsform der Fig. 15 besteht das Filterteil 12 aus einer einheitlichen umlaufenden, aber nicht kreisförmig gebildeten Filterwandung 27. Diese Filterwandung 27 hat hier einen gleichen Grundriss, wie er das Filterteil 12 gem. Fig. 11 insgesamt, ungeachtet der durch die dort zwei Filterwandungen 27 gegebenen Zwickel, aufweist. Entsprechend ergibt sich in der Querschnittsdarstellung der Fig. 16 auch nur ein einheitlicher innerer Freiraum 30. Ein Strömungskanal 36 ist dort nicht vorgesehen, sondern vielmehr nur, auch hier gegenüber einer Mittelachse des Freiraums 30 versetzt angeordnet, der Auslass 10 ausgebildet. Der Auslass 10 weist einen Kragen 37 auf, mit welchem das Bodenteil 22 streckverbunden ist.

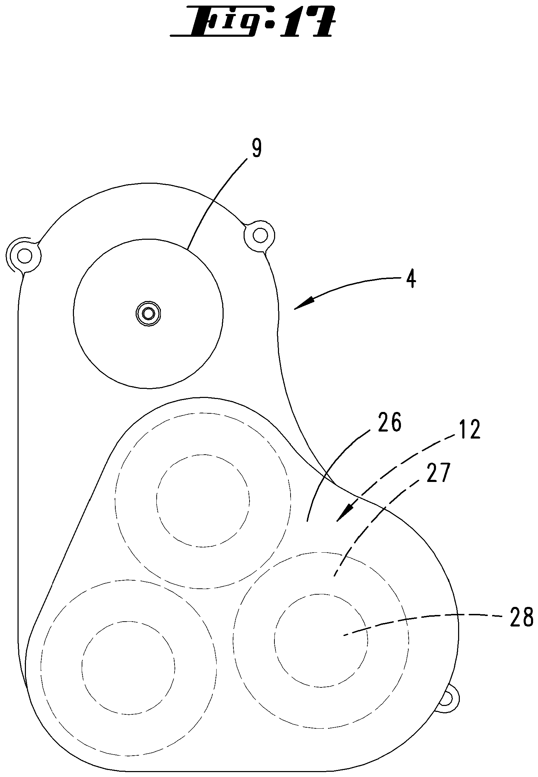

In Fig. 17 ist eine Ausführungsform dargestellt, bei welcher in einer analogen Ausgestaltung zu der Ausführungsform der Fig. 11 drei gesonderte Filterwandungen, auch hier mit jeweils kreisförmigem gesonderten Grundriss, gebildet sind. Im Übrigen ergeben sich gleiche Verhältnisse wie zu der Ausführungsform der Fig. 11 beschrieben.

**Bezugszeichenliste**

| | | | |
|---|---|---|---|
| 1 | Seitenkanalverdichter | 26 | Filterdecke |
| 2 | Elektromotor | 27 | Filterwandung |
| 3 | Gebläse | 28 | Grundrissfläche |
| 4 | Luftfilter-Vorsatz | 29 | Innenraum |
| 5 | Luftauslass | 30 | Freiraum |
| 6 | Sicherheitsventil | 31 | Ausformung |
| 7 | Grundriss | 32 | Befestigungsschraube |
| 8 | Filtermaterial | 33 | Gewindeöffnung |
| 9 | Einlass | 34 | Bodenöffnung |
| 10 | Auslass | 35 | Aufnahmeausformung |
| 11 | Anschlussflansch | 36 | Strömungskanal |
| 12 | Filterteil | 37 | Steckkragen |
| 13 | Grundrissfläche | | |
| 14 | Randkante | M | Mittelachse |
| 15 | Randkante | A | Abmessung |
| 16 | Randkante | G | Gesamtquerschnitt |
| 17 | Randkante | L | Gesamtmaß |
| 18 | Randkante | K | Mittelkreislinie |
| 19 | Filterteil | l | Länge |
| 20 | Freiraum | b | Breite |
| 21 | Filterwand | B | Breite |
| 22 | Bodenteil | V | Versetzmaß |
| 23 | Stufe | W | Wandungsbereiche |
| 24 | Einsetzöffnung | E | Krümmungsmaß |
| 25 | Durchlassöffnungen | | |

## Patentansprüche

1. Filterteil (12) zum Einsatz in einem Luftfilter-Vorsatz (4), aufweisend ein Filterelement (27) mit einer Filterwandung (27) aus plissiertem Filtermaterial (8) und einem inneren Freiraum (30), wobei weiter ein Grundriss des Filterteils (12) langgestreckt kreisabschnittsförmig gekrümmt ist und in Erstreckungsrichtung mit gekrümmten Randkanten (14, 15) ausgebildet ist, wobei zwei Filterelemente zusammengefasst vorgesehen sind und eine Filterwandung jeweils aus einem plissierten Material besteht, wobei das Filterteil (12) eine oberseitig dicht abschließende Filterdecke (26), die unmittelbar auf dem Filtermaterial aufsitzt, und ein Bodenteil (22) aufweist, wobei sich zwischen dem Bodenteil (22) und der Filterdecke (26) zwei gesonderte Filterwandungen (27) der Filterelemente erstrecken, wobei das Bodenteil (22) jedem Freiraum (30) zugeordnet eine Bodenöffnung (34) aufweist, wobei die Filterdecke (26) und das Bodenteil (22) übereinstimmende, langgestreckte Grundrisse aufweisen, **dadurch gekennzeichnet, dass** das Filterteil (12) zur Schraubbefestigung in dem Luftfilter-Vorsatz an der Filterdecke (26) über den Grundriss der Filterdecke an mehreren Stellen vorstehende ohrenartige Ausformungen (31) aufweist, dass die gekrümmten Randkanten (14,15) über stärker gekrümmte stirnseitige Randkanten (16, 17) ineinander übergehen, dass beide Filterwandungen (27) mit den stärker gekrümmten stirnseitigen Randkanten des Bodenteils abschließen und dass die Filterwandungen (27) unmittelbar nebeneinander angeordnet sind.

2. Luftfilter-Vorsatz (4) für eine Strömungsmaschine, insbesondere einen Seitenkanalverdichter, mit einem Gehäuse und einem in einem Gehäuse-Innenraum angeordneten Filterteil (12) nach Anspruch 1, mit einem bspw. aus einem Vlieswerkstoff bestehenden Filtermaterial (8) und mit in dem Gehäuse ausgebildeten, einen freien Öffnungsquerschnitt aufweisenden Einlass (9) und Auslass (10) für hindurchgesaugte Luft, **dadurch gekennzeichnet, dass** der das im Filterteil (12) befindliche Filtermaterial (8) aufnehmende Gehäuse-Innenraum sich seitlich zu dem Öffnungsquerschnitt des Einlasses (9) ungleichförmig und in einer Richtung um ein Vergrößerungsmaß erstreckt, das dem 1½-fachen oder mehr der Abmessung von einer Mittelachse (M) des Einlasses (9) bis zu einer Grenze des Öffnungsquerschnittes in dieser Richtung entspricht.

3. Luftfilter-Vorsatz nach Anspruch 2, **dadurch gekennzeichnet, dass** der Grundriss an einer Querschnittskontur des Gehäuse-Innenraums (29) des Luftfiltervorsatzes (4) angepasst ist.

4. Luftfilter-Vorsatz nach einem der Ansprüche 2 oder 3, **dadurch gekennzeichnet, dass** das Gehäuse des Luftfilter-Vorsatzes (4) in der Draufsicht eine nierenförmige Gestalt aufweist.

5. Luftfilter-Vorsatz nach einem der Ansprüche 2 bis 4, **dadurch gekennzeichnet, dass** zu filterndes Medium durch den Einlass (9) in den Luftfiltervorsatz (4) einströmt und durch den Auslass (10) ausströmt, wobei nach dem Einlass (9) das zu filternde Medium durch beide Filterwandungen (27) in den inneren Freiraum (30) strömt, der von einer solchen Wandung umschlossen ist, und aus beiden Freiräumen (30) dann durch denselben Auslass (10) ausströmt.

6. Luftfilter-Vorsatz nach einem der Ansprüche 2 bis 5, **dadurch gekennzeichnet, dass** in dem Luftfiltervorsatz, auch bodenseitig, eine Aufnahmeausformung (35) ausgebildet ist, auf welcher das Bodenteil (22) randseitig im Einbauzustand aufsitzt und abgedichtet ist, wobei in Zusammenwirkung mit dem Bodenteil (22) ein Strömungskanal (36) gebildet ist, der die durchströmende Luft insgesamt zu dem Auslass (10) leitet.

7. Seitenkanalverdichter mit einem Luftfilter-Vorsatz (4) nach einem der Ansprüche 2 bis 6, **dadurch gekennzeichnet, dass** das Gehäuse in der Draufsicht zumindest teilweise innerhalb einer Außenkontur des Seitenkanalverdichters, bezogen auf eine Projektion der Verdichter- Außenkontur (Gebläse-Außenkontur) in Richtung einer Drehachse des Verdichter-Gebläses angeordnet ist.

8. Seitenkanalverdichter nach Anspruch 7, **dadurch gekennzeichnet, dass** das Gehäuse eine nicht kreisförmige, nierenförmige Gestalt aufweist.

## Claims

1. Filter part (12) for use in an air filter attachment (4), comprising a filter element (27) having a filter wall (27) made of pleated filter material (8) and an inner free space (30), an outline of the filter part (12) being elongate and curved in the manner of a circular segment and being formed having curved edges (14, 15) in the extension direction, two filter elements being provided so as to be merged and each filter wall consisting of a pleated material, the filter part (12) having, on its upper side, a tightly closed filter cover (26) which sits directly on the filter material and has a bottom part (22), two separate filter walls (27) of the filter elements extending between the bottom part (22) and the filter cover (26), the bottom part (22) having a bottom opening (34) associated with each free space (30), the filter cover (26) and the bottom part (22) having matching, elongated outlines, **characterised in that** for screw fastening in the air filter attachment, the filter part (12) has, on the filter cover (26), ear-like formations (31) protruding in several places over the outline of the filter cover, **in that** the curved edges (14, 15) merge into one another via more heavily curved end edges (16, 17), **in that** both filter walls (27) end with the more heavily curved end edges of the bottom part and **in that** the filter walls (27) are arranged directly next to one another.

2. Air filter attachment (4) for a turbomachine, in particular a side channel compressor, having a housing and a filter part (12) according to claim 1 arranged in a housing interior, having a filter material (8) consisting, for example, of a nonwoven material and having an inlet (9) and an outlet (10), formed in the housing and having a free opening cross section, for drawn-through air, **characterised in that** the housing interior accommodating the filter material (8) located in the filter part (12) extends laterally with respect to the opening cross section of the inlet (9) in a non-uniform manner and in one direction by a degree of enlargement which corresponds to 1½ times or more the measurement from a central axis (M) of the inlet (9) to a boundary of the opening cross section in this direction.

3. Air filter attachment according to claim 2, **characterised in that** the outline is adapted to a cross-sectional contour of the housing interior (29) of the air filter attachment (4).

4. Air filter attachment according to either claim 2 or claim 3, **characterised in that** the housing of the air filter attachment (4) has a kidney-shaped design in plan view.

5. Air filter attachment according to any of claims 2 to 4, **characterised in that** a medium to be filtered flows into the air filter attachment (4) through the inlet (9) and flows out through the outlet (10), and, after flowing through the inlet (9), the medium to be filtered flowing through both filter walls (27) into the inner free space (30) which is enclosed by one such wall and then flowing out of both free spaces (30) through said outlet (10).

6. Air filter attachment according to any of claims 2 to 5, **characterised in that** a receiving formation (35) is formed in the air filter attachment, also on the bottom side, on which formation the bottom part (22) is seated and sealed at the edge in the installation state, a flow channel (36) being formed in combination with the bottom part (22), which channel carries the through-flowing air as a whole to the outlet (10).

7. Side channel compressor having an air filter attachment (4) according to any of claims 2 to 6, **characterised in that** the housing, in plan view, is arranged at least in part within an outer contour of the side channel compressor with respect to a projection of the compressor outer contour (blower outer contour) towards an axis of rotation of the compressor blower.

8. Side channel compressor according to claim 7, **characterised in that** the housing has a non-circular, kidney-shaped design.

## Revendications

1. Filtre (12) destiné à être utilisé dans un module de filtre à air (4), présentant un élément filtrant (27) avec une paroi de filtre (27) en matériau filtrant plissé (8) et un espace libre intérieur (30), dans lequel, en outre, un plan de base du filtre (12) est allongé et courbé en forme de tronçon de cercle et est réalisé avec des bords courbés (14, 15) dans la direction d'extension, dans lequel deux éléments filtrants sont prévus groupés ensemble et une paroi filtrante est à chaque fois constituée d'un matériau plissé, dans lequel le filtre (12) présente une partie de couverture de filtre (26) procurant une fermeture étanche sur le côté supérieur et qui repose directement sur le matériau filtrant, et une partie de base (22), dans lequel deux parois de filtre séparées (27) des éléments filtrants s'étendent entre la partie de base (22) et la partie de couverture de filtre (26), dans lequel la partie de base (22) présente une ouverture de base (34) associée à chaque espace libre (30), dans lequel la partie de couverture de filtre (26) et la partie de base (22) présentent des plans de base allongés qui concordent, **caractérisé en ce que** le filtre (12) présente sur la partie de couverture de filtre (26) des façonnements en forme d'oreille (31) dépassant à plusieurs endroits du plan de base de la partie de couverture de filtre pour la fixation par vis dans le module de filtre à air, **en ce que** les bords courbés (14, 15) passent l'un dans l'autre par des bords frontaux (16, 17) plus fortement courbées, **en ce que** les deux parois de filtre (27) se terminent au niveau des bords frontaux plus fortement courbées de la partie de base et **en ce que** les parois de filtre (27) sont agencées directement l'une à côté de l'autre.

2. Module de filtre à air (4) pour une turbomachine, en particulier un compresseur à canal latéral, avec un boîtier et un filtre (12) selon la revendication 1 agencé dans un espace intérieur du boîtier, avec un matériau filtrant constitué par exemple par un matériau non tissé et avec une entrée (9) et une sortie (10) pour l'air aspiré à travers qui sont formées dans le boîtier et présentent une section transversale d'ouverture libre, **caractérisé en ce que** l'espace intérieur du boîtier qui reçoit le matériau filtrant (8) se trouvant dans le filtre (12) s'étend de manière non uniforme latéralement par rapport à la section transversale d'ouverture de l'entrée (9) et avec une dimension d'agrandissement dans une direction qui correspond à 1 fois ½ ou plus la dimension depuis un axe central (M) de l'entrée (9) jusqu'à une limite de la section transversale d'ouverture dans cette direction.

3. Module de filtre à air selon la revendication 2, **caractérisé en ce que** le plan de base est adapté à un contour de section transversale de l'espace intérieur (29) du boîtier du module de filtre à air (4).

4. Module de filtre à air selon l'une des revendications 2 ou 3, **caractérisé en ce que** le boîtier du module de filtre à air (4) présente, en vue de dessus, une configuration réniforme.

5. Module de filtre à air selon l'une des revendications 2 à 4, **caractérisé en ce que** le fluide à filtrer entre dans le module de filtre à air (4) par l'entrée (9) et sort par la sortie (10), dans lequel le fluide à filtrer s'écoule après l'entrée (9) à travers les deux parois de filtre (27) dans l'espace libre intérieur (30) qui est entouré par une telle paroi, puis sort des deux espaces libres (30) par la même sortie (10).

6. Module de filtre à air selon l'une des revendications 2 à 5, **caractérisé en ce que** dans le module de filtre à air est formé, également côté base, un façonnement de réception (35) sur lequel, à l'état monté, la partie de base (22) repose par le bord de manière étanche, dans lequel un canal d'écoulement (36) est formé en coopération avec la partie de base (22) qui conduit l'air le traversant globalement vers la sortie (10).

7. Compresseur à canal latéral comprenant un module de filtre à air (4) selon l'une des revendications 2 à 6, **caractérisé en ce que** le boîtier est agencé, en vue de dessus, au moins partiellement à l'intérieur d'un contour extérieur du compresseur à canal latéral, par rapport à une projection du contour extérieur du compresseur (contour extérieur de la soufflante) dans la direction d'un axe de rotation de la soufflante du compresseur.

8. Compresseur à canal latéral selon la revendication 7, **caractérisé en ce que** le boîtier présente une configuration non circulaire réniforme.
